# EUROPEAN PATENT APPLICATION

(11) **EP 2 637 146 A2**
(43) Date of publication of application: **11.09.2013**
(21) Application number: 13156889.1
(22) Date of filing: 27.02.2013
(51) Int. Cl.: G07G 1/00

(54) **Control system, and control method of a control system**

(30) Priority: 05.03.2012 JP 2012048498
(71) Applicant: Seiko Epson Corporation, Tokyo 163-0811 (JP)
(72) Inventor: Tsutsumi, Koichiro, Suwa-shi, Nagano 392-8502 (JP); Takasu, Kazuhiro, Suwa-shi, Nagano 392-8502 (JP)
(74) Representative: MERH-IP Matias Erny Reichl Hoffmann

(57) **Abstract**

When a dedicated user interface is displayed on the touch panel 10a of a tablet terminal 10 in a control system 1, displaying a virtual keyboard in conjunction with selecting an input field is prohibited when information is input from an input device connected to a printer 11, and when an input field for inputting information through a dedicated virtual keypad displayed in the dedicated user interface UI is selected.

## Description

### BACKGROUND

### 1. Technical Field

The present invention relates to a control system having a recording device and an information processing device with a touch panel, a control method of the control system, and the information processing device.

### 2. Related Art

An information processing devices that displays a virtual keyboard on a touch panel and enables data input through the virtual keyboard is disclosed in Japanese Unexamined Patent Appl. Pub.JP-A-2012-27643.
When data can be input using a virtual keyboard as in the terminal disclosed in JP-A-2012-27643, and an input field for inputting information is selected, the virtual keyboard is automatically displayed, thereby improving usability.

This type of information processing device could also be installed at a checkout counter in a shopping center, department store, or other retail store with a recording device connected thereto at the checkout register, and a user interface for the recording device displayed on the information processing device. In order to improve the productivity of the checkout clerks, the user interface must be made as user-friendly as possible, and the likelihood of input errors resulting from the checkout clerk inadvertently touching the touch panel must be reduced as much as possible. More specifically, because every checkout clerk is not necessarily well-versed in operating the information processing device or particularly familiar with the functions of the user interface, there is a strong need to improve the usability of the user interface and reduce the potential for input errors.
Improving the usability of the user interface and reducing the potential for input errors is thus desirable in an environment where the information processing device may be operated by people that are not well-versed in the operation or functions of a user interface displayed on a touch panel.

### SUMMARY

The object of the present invention is to improve the usability of the user interface and reduce the potential for input errors when using a user interface displayed on the touch panel of an information processing device. For solving the object of the present invention, a control system according to claim 1 is proposed, which may in particular be a POS system, and a method according to claim 12 is proposed. Dependent claims relate to preferred embodiments.

One aspect of the invention may be a control system, in particular a POS system, including: a scanner that reads product information and transmits the product information; a recording device that connects to the scanner, receives the product information transmitted by the scanner, and transmits the received product information; and an information processing device having a touch panel that displays a web browser with an input field and is operated by a touch operation, and a controller that executes a transaction process based on the product information transmitted from the recording device, and prohibits displaying a virtual keyboard on the touch panel.
Preferably, the controller in the information processing device prohibits displaying the virtual keyboard based on input of the product information transmitted from the recording device to the input field.
Further preferably, the controller in the information processing device prohibits displaying the virtual keyboard when the input field to which the product information transmitted from the recording device is input is selected by a touch operation on the touch panel.
Further preferably, the information processing device transmits receipt information generated by a transaction process of the control unit to the recording device.
In another aspect of the invention, the recording device may have a print unit; and the print unit prints a receipt based on the receipt information transmitted from the information processing device.
Another aspect of the invention may be a control system including an input device that acquires input information; a recording device that connects to the input device and receives the input information; and an information processing device that connects to the recording device, has a touch panel, displays a virtual keyboard on the touch panel for inputting information, and when an input field for inputting information from the input device connected to the recording device is selected, prohibits displaying the virtual keyboard in conjunction with selection of the input field.
In this aspect of the invention, the information processing device prohibits displaying the virtual keyboard when an input field to which information from an input device is input is selected. As a result, unnecessary interference with the appearance and ease of use of the touch panel by the presence of a virtual keyboard can be prevented, and the risk of input errors caused by unintentionally touching the area of the virtual keyboard in the user interface can be reduced. The user also does not need to do anything to cancel display of the virtual keyboard, and user productivity can be improved.

In this aspect of the invention, the information processing device may have a touch-operated input unit that inputs to the input field in response to a touch operation on the touch panel, and prohibits displaying the virtual keyboard when a touch operation is performed on the touch-operated input unit.
The information processing device in this aspect of the invention may prohibit displaying the virtual keyboard when the input field is selected by a touch operation on the touch-operated input unit. As a result, unnecessary interference with the appearance and ease of use of the user interface by the presence of a virtual keyboard can be prevented, and the risk of input errors caused by unintentionally touching the area of the virtual keyboard in the user interface can be reduced. The user also does not need to do anything to cancel display of the virtual keyboard, and user productivity can be improved.

In another aspect of the invention, the input device may be a barcode scanner; the recording device and the barcode scanner communicate by wireless near-field communication; and the information processing device prohibits displaying the virtual keyboard in conjunction with selection of the input field whether or not a communication between the recording device and the barcode scanner is established.
When the recording device and barcode scanner communicate by wireless near-field communication and a communication link between the devices is not established, a function of the terminal OS may try to automatically display a virtual keyboard when the input field is selected because input from the barcode scanner is disabled. By prohibiting displaying the virtual keyboard even when a communication link is not established, this aspect of the invention can prevent displaying the virtual keyboard on the touch panel even when the input field is selected while the communication link is temporarily interrupted or some other transient communication error occurs, and thereby improve the usability of the touch panel and reduce input errors.

Another aspect of the invention also may have a server that connects to the information processing device through a network, and transmits information related to a transaction process to the information processing device.
The information processing device may access the server and get a file that is displayed on the web browser, and displays on the touch panel.
Another aspect of the invention may have a server that connects to the information processing device through a network, and provides an application to the information processing device. The information processing device may access the server, acquire a display file that displays a user interface, display the user interface on the touch panel using a web browser, and prohibit displaying the virtual keyboard based on a program contained in the display file.
In this aspect of the invention the information processing device accesses a server, and controls the recording device using a function of an application provided by the server. A function that prohibits displaying the virtual keyboard can therefore be desirably installed on the information processing device even when the information processing device is a general-purpose device only having a simple browser installed instead of being a dedicated device that controls the recording device using a function of an application installed on the information processing device.

Another aspect of the invention is a control method of a control system that displays an input field for displaying input information transmitted from an input device to an information processing device that has a touch panel and displays a virtual keyboard in conjunction with a touch operation on the touch panel; and prohibits displaying the virtual keyboard when a touch operation is performed on the input field.
The control method according to this aspect of the invention prohibits displaying the virtual keyboard even when the input field to which input information from the input device is input is selected by being touched. As a result, unnecessary interference with the appearance and ease of use of the touch panel by the presence of a virtual keyboard can be prevented, and the risk of input errors caused by unintentionally touching the area of the virtual keyboard in the user interface can be reduced. The user also does not need to do anything to cancel display of the virtual keyboard, and user productivity can be improved.
The touch operation is an operation that selects input information transmitted from the input device.
Further preferably, the information processing device has a touch-operated input unit that inputs to the input field in response to a touch operation on the touch panel, and prohibits displaying the virtual keyboard when the touch-operated input unit is touched.

Another aspect of the invention is an information processing device having a connection unit that connects to a recording device; a touch panel that is operated by touch, displays an input field for displaying input information input from an input device connected to the recording device, and displays a virtual keyboard; and a control unit that prohibits displaying the virtual keyboard when a touch operation is performed on the input field displayed on the touch panel.
This aspect of the invention prohibits displaying the virtual keyboard even when the input field to which input information from the input device is input is selected by being touched. As a result, unnecessary interference with the appearance and ease of use of the touch panel by the presence of a virtual keyboard can be prevented, and the risk of input errors caused by unintentionally touching the area of the virtual keyboard in the user interface can be reduced. The user also does not need to do anything to cancel display of the virtual keyboard, and user productivity can be improved.
Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram showing the configuration of a control system according to a preferred embodiment of the invention.
FIG. 2 is a block diagram showing the functional configuration of the control system.
FIG. 3 shows an example of a dedicated user interface displayed on a touch panel.
FIG. 4 is a flow chart showing the operation of devices in the control system.

### DESCRIPTION OF EMBODIMENTS

A preferred embodiment of the present invention is described below with reference to the accompanying figures.

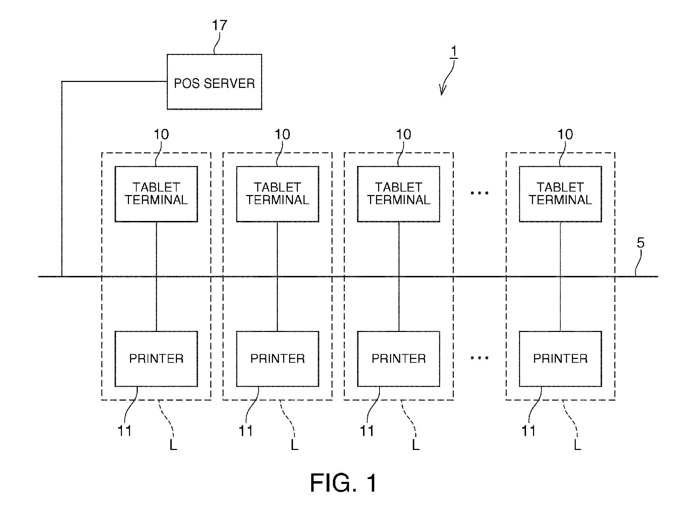

FIG. 1 is a block diagram showing the configuration of a control system 1 according to this embodiment of the invention.
The control system 1 is part of a POS system, which is a system used in shopping centers, department stores, and other retail businesses to manage product marketing, inventory, and product sales in the business, and typically includes at least a function for processing sales based on products purchased by customers, and a function for issuing receipts according to the sale amount and payment provided by the customer, at each of the plural checkout counters L in the store.

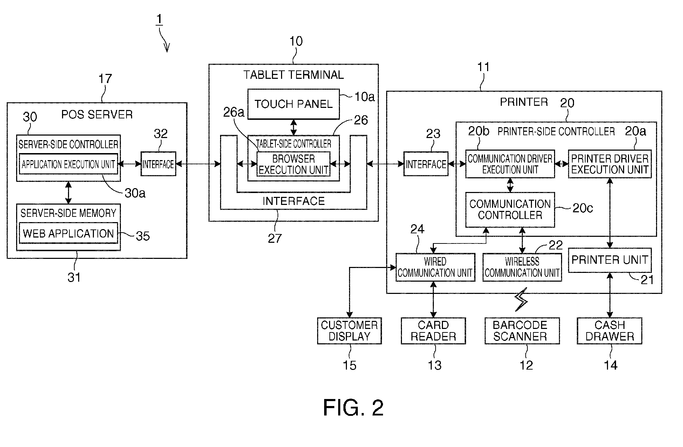

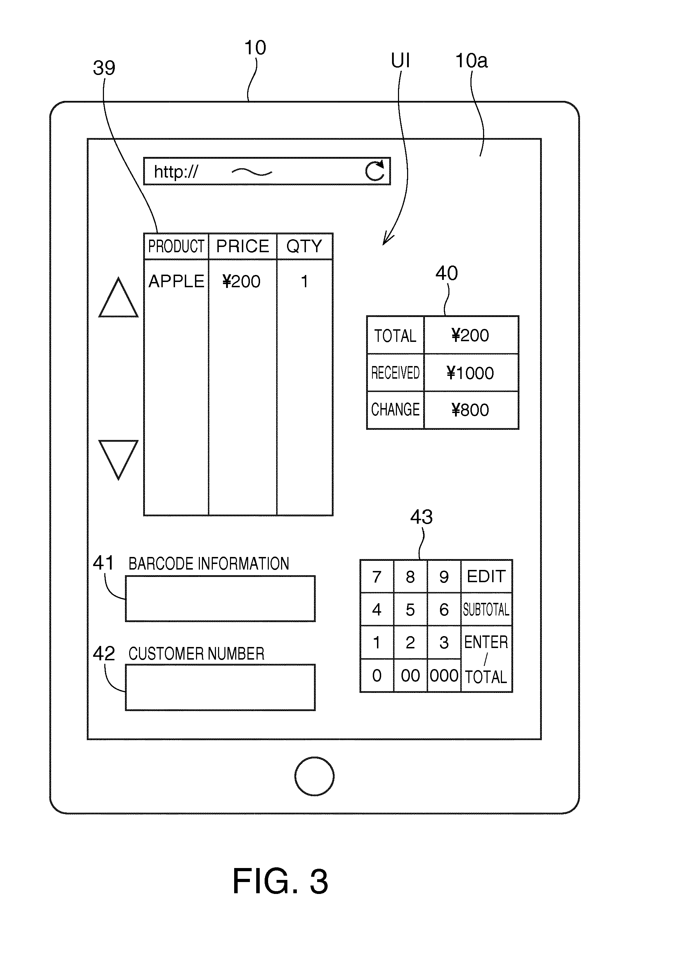

Multiple checkout counters L are provided in a store in which the control system 1 is deployed, and a tablet terminal 10 (information processing device) and a printer 11 (recording device) connected to the tablet terminal 10 are installed at each checkout counter L. The tablet terminal 10 and printer 11 are connected to communicate with each other over a wireless LAN 5 (network) using the Ethernet (R) protocol.
The tablet terminal 10 is a tablet computer. In this embodiment the tablet terminal 10 has a touch panel 10a (display unit, see FIG. 2 and FIG. 3) covering substantially all of the surface that enables inputting information by touching the touch panel 10a, and is not connected to an external keyboard and display panel.
The printer 11 has a function for printing at least receipts. As shown in FIG. 2, external devices connected to the printer 11 include a barcode scanner 12 (input device) that reads product information barcodes on individual products or product packaging, a card reader 13 (input device) for reading cards such as customer membership cards, and a customer display 15 for displaying transaction information for the customer. Of these external devices, the barcode scanner 12 communicates with the printer 11 using wireless near-field communication based on the Bluetooth (R) protocol. The card reader 13 is connected to the printer 11 by a USB cable or other wired cable, and communicates with the printer 11 based on a specific communication protocol.
A POS server 17 (server) is also connected to the wireless LAN 5. The POS server 17 stores a product management database, a sales management database, and a product inventory database, and uses these databases to centrally manage the control system 1. The relationship between the POS server 17 and the tablet terminal 10 is described in detail below.

FIG. 2 is a block diagram showing the basic functional configuration of the tablet terminal 10, printer 11, and POS server 17.
As shown in FIG. 2, the printer 11 has a printer-side controller 20, printer unit 21, wireless communication unit 22, wired communication unit 24, and printer interface 23.
The printer-side controller 20 centrally controls other parts of the printer 11, and includes a CPU, RAM, ROM, and other peripheral circuits. A printer driver for controlling the printer unit 21, and a communication driver for communicating with the tablet terminal 10 according to a specific protocol, are installed in the printer 11. The function blocks of the printer-side controller 20 include a printer driver execution unit 20a that executes the printer driver, and a communication driver execution unit 20b that executes the communication driver. The operation of these function blocks is described further below.
The printer unit 21 is a unit that produces receipts by recording images on recording paper and then cutting the paper, and in addition to a control circuit that controls the component mechanisms has a paper feed mechanism that conveys the recording paper in a specific direction, a recording mechanism that records images on the roll paper with a recording head, and a cutting mechanism that cuts the roll paper.
The wireless communication unit 22 handles wireless near-field communication based on the Bluetooth protocol with input devices including at least a barcode scanner 12, and includes a link manager, link controller, high frequency circuit, and antenna.
The communication controller 20c, which is one function block of the printer-side controller 20, controls the wireless communication unit 22 to communicate with the barcode scanner 12 using Bluetooth-based near-field wireless communication by reading and executing the Bluetooth driver stack for controlling Bluetooth hardware.
The wired communication unit 24 handles wired communication according to a specific protocol with input devices including at least the card reader 13 and customer display 15, and includes a network card connected to a physical port. The communication controller 20c of the printer-side controller 20 controls the wired communication unit 24 to communicate by wire with the card reader 13 and customer display 15.
The interface 23 communicates accordingto a specific communication standard with the tablet terminal 10 as controlled by the printer-side controller 20.

As shown in FIG. 2, the tablet terminal 10 includes a tablet-side controller 26, touch panel 10a, and terminal interface 27.
The tablet-side controller 26 centrally controls tablet terminal 10 operation, and includes a CPU, RAM, ROM, and other peripheral circuits. The tablet-side controller 26 includes a browser execution unit 26a, which is a function block that executes a specific browser.
The touch panel 10a displays information on an LCD panel or other display panel and detects touches on the touch panel 10a as controlled by the tablet-side controller 26, and outputs to the tablet-side controller 26.
The terminal interface 27 communicates according to a specific communication standard with the printer 11 and POS server 17 as controlled by the tablet-side controller 26.
In this embodiment of the invention the tablet-side controller 26 and interface 27 work together to function as a connection unit that connects to a recording device.

As shown in FIG. 2, the POS server 17 includes a 30, server-side memory 31, and server interface 32.
The server-side controller 30 centrally controls POS server 17 operation, and includes a CPU, RAM, ROM, and other peripheral circuits. The server-side memory 31 includes a hard disk drive, EEPROM or other nonvolatile memory, and stores data rewritably. The server interface 32 communicates with the tablet terminal 10 according to a specific protocol as controlled by the server-side controller 30.
The server-side memory 31 stores a loadable web application 35 (application). The application execution unit 30a of the server-side controller 30 is the function block that runs the web application 35. A function of the web application 35 is described below.

Operation when the devices rendering the control system 1 work together and run a transaction process is described next.
The tablet terminal 10 first performs the following processes before executing the transaction process.
The checkout clerk or other operator first starts the browser on the tablet terminal 10 to display a dedicated user interface UI (a user interface such as shown in FIG. 3) on the touch panel 10a. In response to these commands, the browser execution unit 26a of the tablet-side controller 26 accesses a specific address on the POS server 17, gets an HTML file (display file) for displaying the dedicated user interface UI, and displays the dedicated user interface UI based on this file. This HTML file includes a program written in a specific scripting language to provide a function that works with the application execution unit 30a of the POS server 17 to execute the transaction-related processes (described below).

FIG. 3 shows an example of a dedicated user interface UI displayed on the touch panel 10a.
A list display area 39 for displaying the names, prices, and quantities of the products purchased by a customer is displayed in the top left part of the dedicated user interface UI shown in FIG. 3. Transaction amount fields 40 for inputting or displaying the total of the products purchased by the customer, the amount input as received from the customer for payment, and the amount of change due to the customer, are displayed on the right beside the list display area 39.
A barcode data input field 41 in which the information expressed by the barcode that is read by the barcode scanner 12 (the "barcode information" below) is input and displayed is formed below the list display area 39. The barcode information is basically identification information unipuely assigned to each product.
A customer number input field 42 to which the acquired customer number is input when a frequent customer card is presented by the customer and read with the card reader 13 is displayed below the barcode data input field 41.
A virtual keypad 43 (touch-operated input unit) is displayed on the right beside the barcode data input field 41 and customer number input field 42. The virtual keypad 43 can be used to input information to the input fields of the dedicated user interface UI described above, and the virtual keypad 43 includes all keys required to input the required information.
An address input field 44 in which the accessed address is displayed is presented at the top of the dedicated user interface UI.

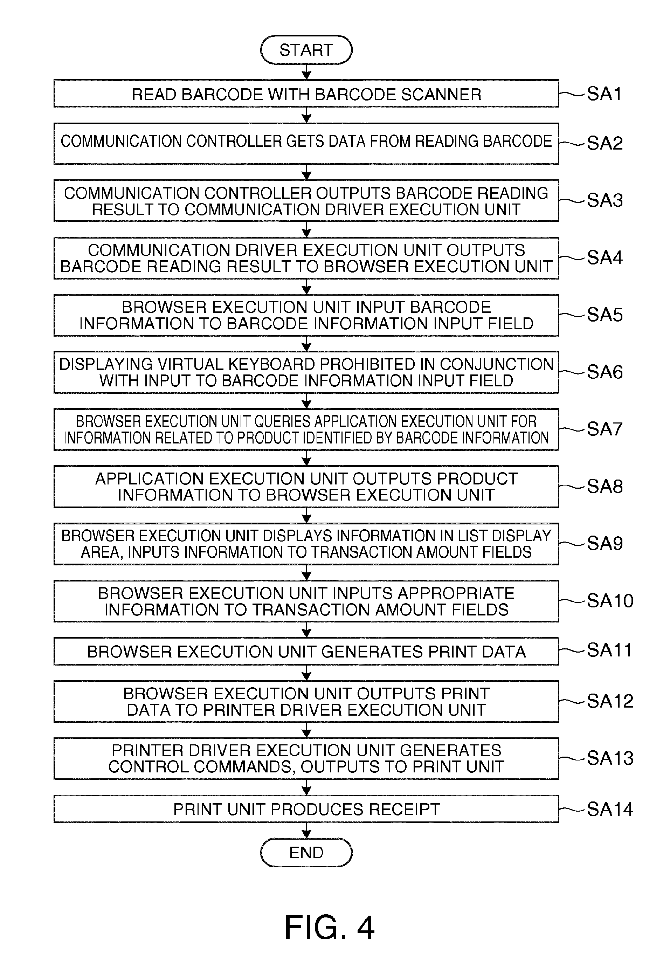

Operation of the components of the control system 1 configured as described above when executing a transaction process is described below referring to the flow chart in FIG. 4 and using a customer purchasing one product as an example. Note that for simplicity in the following description, all of the steps in the flow chart in FIG. 4 are not performed by the same subject.
At the checkout counter L, the checkout clerk first reads the barcode on the single product with the barcode scanner 12 (step SA1). The communication controller 20c of the printer-side controller 20 then acquires the data indicating the result of scanning with the barcode scanner 12 through the wireless communication unit 22 (step SA2). Based on the data indicating the scanning result, the communication controller 20c then generates data indicating the barcode information, and outputs the data indicating the barcode information to the communication driver execution unit 20b (step SA3).
The communication driver has a function for outputting the data indicating the barcode information according to a specific protocol to the browser execution unit 26a of the tablet-side controller 26 of the tablet terminal 10. Using this function, the communication driver execution unit 20b outputs the data indicating the barcode information to the browser execution unit 26a (step SA4).
When the data indicating the barcode information is input, the browser execution unit 26a of the tablet-side controller 26 of the tablet terminal 10 inputs the barcode information to the barcode data input field 41 using a function of the program (a "dedicated script") contained in the HTML file related to the dedicated user interface UI (step SA5). Using a function of the dedicated script, the browser execution unit 26a then prohibits displaying a virtual keyboard in conjunction with inputting barcode information to the barcode data input field 41 (selecting the barcode data input field 41) (step SA6). Automatically displaying a virtual keyboard when an input field is selected is normally handled by a function of the tablet terminal 10 operating system.
The process of step SA6 and the effect thereof are described in detail below.

As described above, the browser execution unit 26a prohibits displaying a virtual keyboard in conjunction with inputting barcode information to the barcode data input field 41 in step SA6 using a function of the program contained in the HTML file. For example, the browser execution unit 26a prohibits displaying the virtual keyboard by disabling the interrupt process that is executed by the OS to cause a virtual keyboard to pop-up in a specific area on the touch panel 10a when triggered by selecting an input field.
The effect of this is described below. More specifically, because barcode information is input automatically to the barcode data input field 41 based on the result of reading the barcode, there is no need to input information using the virtual keyboard if the barcode is read correctly and the content of the barcode information is correct. Therefore, by prohibiting displaying the virtual keyboard in conjunction with input of barcode information to the barcode data input field 41, unnecessary interference with the readability and usability of the dedicated user interface UI by the presence of a virtual keyboard can be prevented while also eliminating any disadvantage of not displaying the virtual keyboard. In addition, the risk of input errors resulting from unintentionally touching the area in the dedicated user interface UI corresponding to the virtual keyboard can be reduced. More specifically, because the checkout clerk is not necessarily familiar with operating a tablet terminal 10 and may not fully understand the functions of the dedicated user interface UI, the foregoing effect of the invention is particularly great when a person that is thus unfamiliar with operating a touch tablet is operating the checkout register. The checkout clerk can also work more productively with this embodiment of the invention because the checkout clerk does not need to perform a specific process to cancel the virtual keyboard display. This is also related to reducing the time that the customer spends at the checkout counter L, and therefore leads to increased customer satisfaction.

After step SA6 completes, the browser execution unit 26a communicates with the application execution unit 30a of the POS server 17 using a function of the dedicated script to request the name and price of the product indicated by the barcode information (step SA7). The application execution unit 30a receiving this inpuiry accesses the appropriate database using a function of the web application 35, gets the required information, and outputs the acquired information to the browser execution unit 26a of the tablet terminal 10 (step SA8).
The web application 35 includes functions normally included in a POS application, including product search, sales management, and inventory management functions. More specifically, in addition to each tablet terminal 10 having a locally installed POS application in the control system 1 according to this embodiment of the invention, each tablet terminal 10 installed in the store can also access the POS server 17 as necessary and use functions of the web application 35 to execute POS system processes. This configuration can ensure that each tablet terminal 10 runs the same application, eliminates the need to upgrade the application on each tablet terminal 10 every time the application is upgraded, and improve the ease of maintenance. There is also no need to provide special functions or connect special external devices to the tablet terminal 10, and general-purpose tablets having a simple browser installed can be used as the tablet terminal 10.

Using a function of the dedicated script, the browser execution unit 26a of the tablet terminal 10 displays the names, prices, and quantities of the products purchased by the customer in the list display area 39, and displays the total of the purchased products in a specific field in the transaction amount fields 40 (step SA9).
Next, the checkout clerk confirms the products in the transaction using the virtual keypad 43, receives payment from the customer, and provides the appropriate change. In response to these operations, the browser execution unit 26a then communicates appropriately with the application execution unit 30a, and displays the appropriate information in the corresponding fields of the transaction amount fields 40 using a function of the dedicated script (step SA10).
Next, the browser execution unit 26a generates information (print data) for the receipt to be issued by the printer unit 21 using a function of the dedicated script (step SA11). This print data includes data for the text to be recorded on the receipt, image data for any logos, the positions of the text and images, information related to text styling, and any other information needed to record other text or images and produce a receipt.
The browser execution unit 26a then outputs the generated print data through the communication driver execution unit 20b of the printer 11 to the printer driver execution unit 20a according to the specific protocol (step SA12). Based on the input print data, the printer driver execution unit 20a then generates control commands based on the control language of the printer unit 21 causing the printer unit 21 to execute the steps related to producing a receipt, and outputs to the printer unit 21 (step SA13). The control circuit of the printer unit 21 then controls the relevant mechanisms based on the control commands, and produces a receipt (step SA14).

As described above, displaying the virtual keyboard is prohibited in this embodiment when the barcode is read by the barcode scanner 12 and the barcode information is input to the barcode data inputfield 41, but displaying the virtual keyboard may also be prohibited in the following situations in order to improve the usability of the dedicated user interface UI and reduce the risk of input errors.
More specifically, the browser execution unit 26a prohibits displaying the virtual keyboard through a function of the dedicated script while the dedicated user interface UI is displayed and any input field to which information can be input, that is, the transaction amount fields 40, barcode data input field 41, or customer number input field 42, is selected by touch, or the virtual keypad 43 (touch-operated input unit) is touched. For example, the content of the input information can be changed using the virtual keypad 43 after information is input to the transaction amount fields 40, barcode data input field 41, and customer number input field 42 in this embodiment. The browser execution unit 26a also prohibits displaying the virtual keyboard through a function of the dedicated script when an input field is selected by touch in order to change the content of information input to that input field. Because the virtual keypad 43 contains all keys that are needed to input information to the input fields, this embodiment of the invention can prevent displaying the virtual keyboard when not needed, improve the usability and readability of the dedicated user interface UI, and reduce the risk of input errors.
In this embodiment the browser execution unit 26a also prohibits displaying the virtual keyboard through a function of the dedicated script regardless of whether a Bluetooth communication link is established between the barcode scanner 12 and printer 11. Due to the nature of Bluetooth, communication between devices can be temporarily interrupted and the communication link therefore temporarily lost as a result of noise, interference, or other factor. When this happens and the barcode cannot be read with the barcode scanner 12, a function of the operating system of the tablet terminal 10 may try to display the virtual keyboard in order to provide a means for inputting data other than the barcode scanner 12. However, because the browser execution unit 26a uses a function of the dedicated script to prohibit displaying the virtual keyboard whether or not a communication link is established, information can still be input to the barcode data input field 41 through the virtual keypad 43 while limiting displaying an unnecessary virtual keyboard.
Note that in the implementation described above, the browser execution unit 26a functions as a control unit that prohibits displaying the virtual keyboard when an input field displayed on a touch panel is operated by touch.

As described above, while the dedicated user interface UI providing an interface for using a printer 11 is displayed on the touch panel 10a and an input field (transaction amount fields 40, barcode data input field 41, customer number input field 42, or address input field 44) for inputting information from an input device connected to the printer 11 or inputting information through a virtual keypad 43 displayed on the dedicated user interface UI is selected, the tablet terminal 10 in the control system 1 according to this embodiment of the invention prohibits displaying the virtual keyboard in conjunction with selection of an input field.
This configuration eliminates any disadvantage of not displaying the virtual keyboard while preventing unnecessary interference with the appearance and usability of the dedicated user interface UI by the presence of a virtual keyboard, and reduces the risk of input errors resulting from unintentionally touching the area corresponding to the virtual keyboard in the dedicated user interface UI. The need for the checkout clerk (user) to cancel the virtual keyboard display is also eliminated, and the productivity of the checkout clerk can be improved.

The printer 11 in this embodiment is connected to a barcode scanner 12 as an input device, and sends barcode information representing the barcode to the tablet terminal 10 when a barcode is read with the barcode scanner 12. The dedicated user interface UI also has a barcode data input field 41 for inputting barcode information, and a virtual keypad 43 for inputing information to the barcode data input field 41. The tablet terminal 10 inputs the barcode information to the barcode data input field 41 when barcode information is received from the printer 11, inputs information corresponding to the touches on the virtual keypad 43 to the barcode data input field 41 when the virtual keypad 43 is touched, and prohibits displaying the virtual keyboard in response to inputting information to the barcode data input field 41.
This configuration eliminates the disadvantage of not displaying the virtual keyboard while preventing part of the customer number input field 42 or list display area 39, for example, from being hidden by the virtual keyboard, reduces the risk of input errors, and contributes to improving the productivity of the checkout clerk.

The tablet terminal 10 according to this embodiment of the invention prohibits displaying the virtual keyboard in conjunction with data input to the barcode data input field 41 whether or not a Bluetooth communication link is established between the printer 11 and barcode scanner 12.
By prohibiting displaying the virtual keyboard even when a communication link is not established, this embodiment of the invention can prevent displaying the virtual keyboard when the communication link is temporarily interrupted or other transient communication errors occur, and can improve the usability of the dedicated user interface UI and reduce input errors.

The tablet terminal 10 in this embodiment of the invention is connected through a wireless LAN 5 to the POS server 17 on which the web application 35 for controlling the printer 11 runs, accesses the POS server 17 and acquires the HTML file that displays the dedicated user interface UI, and displays the dedicated user interface UI on the touch panel 10a through a function of a specific browser. The function that prohibits displaying the virtual keyboard is embodied in a dedicated script (a dedicated program written in a specific scripting language) written in the HTML file.
A function that prohibits displaying the virtual keyboard can therefore be desirably installed on the tablet terminal 10 even when the tablet terminal 10 is a general-purpose device only having a simple browser installed instead of being a dedicated device that controls the printer 11 using a function of an application installed on the tablet terminal 10.

The tablet terminal 10 according to this embodiment has a virtual keypad 43 (touch-operated input unit) for inputting information to an input field by touching the touch panel 10a, and prohibits displaying the virtual keyboard when the virtual keypad is touched.
This configuration can prevent unnecessary interference with the appearance and usability of the dedicated user interface by the presence of a virtual keyboard even when the virtual keypad 43 is touched, and can reduce the risk of input errors resulting from unintentionally touching the area of the user interface corresponding to the virtual keyboard. The need for the user to cancel the virtual keyboard display is also eliminated, and user productivity can be improved.

A preferred embodiment of the invention is described above, but the invention is not so limited and can be changed and adapted in many ways without departing from the scope of the accompanying claims.
For example, the control system according to the invention is described using a POS system in this embodiment of the invention, but the invention is not limited to being used in POS systems. More specifically, the invention can be broadly applied when selecting an input field for which a means of inputting information through an input device connected to a recording device or an input means similar to a virtual keypad 43 is assured.
The function blocks shown in FIG. 2 can also be embodied as desired through the cooperation of hardware and software, and do not suggest a specific hardware configuration. Operations including the steps shown in the flow chart in FIG. 4 can also be achieved by the devices executing a program stored on an externally connected storage medium.
The invention being thus described, it will be obvious that it may be varied in many ways. Such variations are not to be regarded as a departure from the spirit and scope of the invention, and all such modifications as would be obvious to one skilled in the art are intended to be included within the scope of the following claims.

## Claims

1. A control system comprising:
an input device (12; 13) configured to acquire input information;
a recording device (11) being connected to the input device (12; 13) and to receive the input information from the input device (12; 13); and
an information processing device (10) being connected to the recording device (11), the information processing device (10) having a touch panel (10a) for displaying a virtual keyboard (43) on the touch panel (10a) for inputting information, and,
when an input field for inputting information from the input device (12; 13) connected to the recording device (11) is selected, the information processing device (10) is configured to prohibit displaying the virtual keyboard (43) in conjunction with selection of the input field.

2. The control system described in claim 1, wherein:
the information processing device (10) has a touch-operated input unit configured to input to the input field in response to a touch operation on the touch panel (10a), and
the information processing device (10) is configured to prohibit displaying the virtual keyboard (43) when a touch operation is performed on the touch-operated input unit.

3. The control system described in claim 1 or 2, wherein:
the input device is a barcode scanner (12);
the recording device (11) and the barcode scanner (12) are configured to communicate by means of wireless near-field communication; and
the information processing device (10) is configured to prohibit displaying the virtual keyboard (43) in conjunction with selection of the input field whether or not communication between the recording device (11) and the barcode scanner (12) is established.

4. The control system described in at least one of claims 1 to 3, further comprising:
a server (17) being connected to the information processing device (10) through a network, and being configured to provide an application to the information processing device (10);
wherein the information processing device (10) is configured to access the server (17), to acquire a display file for displaying a user interface, to displays the user interface on the touch panel (10a) using a web browser, and to prohibit displaying the virtual keyboard (43) based on a program contained in the display file.

5. The control system described in at least one of claims 1, wherein
the control system is a POS system, and
the input device is a scanner (12) configured to read product information and to transmit the product information;
the recording device (11) is connected to the scanner (12), and is configured to receive the product information transmitted by the scanner (12), and to transmit the received product information; and
the information processing device (10) has the touch panel (10a) configured to display a web browser with an input field to be operated by a touch operation, and a controller (26) configured to execute a transaction process based on the product information transmitted from the recording device (11), and to prohibit displaying the virtual keyboard (43) on the touch panel (10a).

6. The control system described in claim 5, wherein:
the controller (26) in the information processing device (10) is configured to prohibit displaying the virtual keyboard (43) based on input of the product information transmitted from the recording device (11) to the input field.

7. The control system described in claim 5 or 6, wherein:
the controller (26) in the information processing device (10) is configured to prohibit displaying the virtual keyboard (43) when the input field to which the product information transmitted from the recording device (11) is input is selected by a touch operation on the touch panel (10a).

8. The control system described in at least one of claims 5 to 7, wherein:
the information processing device (10) is configured to transmit receipt information generated by a transaction process of the controller (26) in the information processing device (10) to the recording device (11).

9. The control system described in claim 8, wherein:
the recording device (11) has a print unit (21); and
the print unit (21) is configured to print a receipt based on the receipt information transmitted from the information processing device (10).

10. The control system described in at least one of claims 5 to 9, further comprising:
a server (17) being connected to the information processing device (10) through a network, and being configured to transmit information related to a transaction process to the information processing device (10).

11. The control system described in claim 10, wherein:
the information processing device (10) is configured to access the server (17) and to obtain a file to be displayed on the web browser, and to display the corresponding web browser on the touch panel (10a).

12. A control method of a control system, comprising:
displaying an input field for displaying input information transmitted from an input device (12; 13) to an information processing device (10) that has a touch panel (10a) and displays a virtual keyboard (43) in conjunction with a touch operation on the touch panel (10a); and
prohibiting displaying the virtual keyboard (43) when a touch operation is performed on the input field.

13. The control method of a control system described in claim 12, wherein:
the touch operation is an operation that selects input information transmitted from the input device (12; 13).

14. The control method of a control system described in claim 12 or 13, wherein:
the information processing device (10) has a touch-operated input unit that inputs to the input field in response to a touch operation on the touch panel (10a), and
prohibits displaying the virtual keyboard (43) when the touch-operated input unit is touched.

15. The control method of at least one of claims 12 to 14, wherein the control system is a POS system, and
the input device is a scanner (12) reads product information and transmits the product information;
a recording device (11) is connected to the scanner (12), and receives the product information transmitted by the scanner (12), and transmits the received product information; and
the information processing device (10) has the touch panel (10a) configured to display the virtual keyboard (43) and a web browser with an input field to be operated by a touch operation, and a controller (26) that executes a transaction process based on the product information transmitted from the recording device (11), and prohibits displaying the virtual keyboard (43) on the touch panel (10a).
